# EUROPEAN PATENT APPLICATION

(11) **EP 4 379 882 A1**
(43) Date of publication of application: **05.06.2024**
(21) Application number: 23781270.6
(22) Date of filing: 27.03.2023
(51) Int. Cl.: H01M 10/04

(54) **APPARATUS FOR MANUFACTURING ELECTRODE ASSEMBLY**

(30) Priority: 28.03.2022 KR 20220037935
(71) Applicant: LG Energy Solution, Ltd., Seoul 07335 (KR)
(72) Inventor: LEE, Kyuhak, Daejeon 34122 (KR); KIM, Jae Hong, Daejeon 34122 (KR); MIN, Kihong, Daejeon 34122 (KR)
(74) Representative: Goddar, Heinz J.
(86) International application number: PCT/KR2023/004030
(87) International publication number: WO 2023/191415

(57) **Abstract**

The present invention relates to an apparatus for manufacturing an electrode assembly, the apparatus including a fixing part configured to grip and fix a stack in which one or more first electrodes, one or more separators, and one or more second electrodes are stacked, and a press part configured to heat and press the fixing part, in which the fixing part includes two or more portions having different properties.

## Description

### [Technical Field]

This application claims priority to and the benefit of Korean Patent Application No. 10-2022-0037935 filed with the Korean Intellectual Property Office on March 28, 2022, the entire contents of which are incorporated herein by reference.

The present invention relates to an apparatus for manufacturing an electrode assembly. Specifically, the present invention relates to an apparatus for manufacturing an electrode assembly, which is capable of preventing separation and creases of an electrode assembly by increasing a rate of heat transfer to the electrode assembly at the time of bonding the electrode assembly.

### [Background Art]

Unlike primary batteries, secondary batteries may be rechargeable and have small scales and high capacities. Recently, research and development have been actively conducted on the secondary batteries. As development of technologies and demands for mobile devices are increased, there is a rapidly increasing demand for rechargeable batteries as energy sources.

The secondary batteries are classified into coin batteries, cylindrical batteries, angular batteries, and pouch-type batteries depending on shapes of battery casings. In the secondary battery, an electrode assembly mounted in the battery casing is a power generation element that has a structure made by stacking electrodes and separators and may be charged and discharged.

The electrode assemblies may be approximately classified into a Jelly-roll-type electrode assembly made by winding sheet-shaped positive and negative electrodes coated with active materials with a separator interposed therebetween, a stack-type electrode assembly made by sequentially stacking a plurality of positive and negative electrodes in a state in which separators are interposed between the plurality of positive and negative electrodes, and a stack-and-folding-type electrode assembly made by winding stack-type unit cells by using long separation films.

A process of manufacturing a stack-and-folding type electrode assembly in the related art is performed by fixing an electrode assembly, in which electrodes and separators are stacked, by using a gripper or fixing part and then bonding the electrodes and the separators by heating and pressing the stack by using a heating press in order to prevent distortion of the electrode assembly. However, in the process of manufacturing an electrode assembly in the related art, a rate of heat transfer to the electrode assembly from the heating press is reduced or the heat transfer is not uniform because of the gripper or fixing part, which causes a problem in which a bonding force between the electrode and the separator is reduced or the bonding force varies depending on positions of the electrode assembly. For this reason, there is a limitation in ensuring uniformity of the bonding force applied to the electrode assembly.

### [Detailed Description of the Invention]

### [Technical Problem]

The present invention has been made in an effort to solve the above-mentioned problem in the related art, and an object of the present invention is to provide an apparatus for manufacturing an electrode assembly, which is capable of ensuring uniformity of a bonding force applied to the electrode assembly by increasing a rate of heat transfer to the electrode assembly from a press part.

### [Technical Solution]

An embodiment of the present invention provides an apparatus for manufacturing an electrode assembly, the apparatus including: a fixing part configured to grip and fix a stack in which one or more first electrodes, one or more separators, and one or more second electrodes are stacked; and a press part configured to heat and press the fixing part, in which the fixing part includes two or more portions having different properties.

The embodiment of the present invention provides the apparatus for manufacturing an electrode assembly, in which the fixing part may include: a central portion including a surface configured to come into contact with the stack; and a rim portion configured to surround the central portion, and the central portion and the rim portion may be made of different types of materials.

The embodiment of the present invention provides the apparatus for manufacturing an electrode assembly, in which the central portion may have higher thermal conductivity than the rim portion, and the rim portion may have higher strength than the central portion.

The embodiment of the present invention provides the apparatus for manufacturing an electrode assembly, in which the central portion may include any one of silver, copper, gold, aluminum, and duralumin.

The embodiment of the present invention provides the apparatus for manufacturing an electrode assembly in which the rim portion may include any one of a steel-based material, carbon steel, stainless steel, and engineering plastic.

The embodiment of the present invention provides the apparatus for manufacturing an electrode assembly in which the central portion may account for 40% to 90% of an overall area of 100% of the fixing part, and the rim portion may account for 10% to 60% of the overall area of 100% of the fixing part.

The embodiment of the present invention provides the apparatus for manufacturing an electrode assembly, in which the rim portion may not come into contact with the stack.

The embodiment of the present invention provides the apparatus for manufacturing an electrode assembly, in which the central portion and the rim portion may be spaced apart from each other.

The embodiment of the present invention provides the apparatus for manufacturing an electrode assembly further including a coupling part configured to couple the central portion and the rim portion.

The embodiment of the present invention provides the apparatus for manufacturing an electrode assembly, in which the coupling part may couple the central portion and the rim portion by any one method of riveting and T-shaped screw coupling.

The embodiment of the present invention provides the apparatus for manufacturing an electrode assembly, in which the fixing part may include a pair of fixing blocks, and the pair of fixing blocks may press one or more surfaces of the stack while moving in a direction in which the pair of fixing blocks faces each other.

The embodiment of the present invention provides the apparatus for manufacturing an electrode assembly, in which the pair of fixing blocks may each have a flat pressing surface that comes into contact with and presses the stack.

The embodiment of the present invention provides the apparatus for manufacturing an electrode assembly, in which the press part may include a pair of heating blocks, and the pair of heating blocks may each have a heating plate provided on one surface of each of the pair of heating blocks that comes into contact with the fixing part.

The embodiment of the present invention provides the apparatus for manufacturing an electrode assembly, in which the press part may include a pair of heating blocks, and a heating part may be included in each of the pair of heating blocks.

### [Advantageous Effects]

According to the apparatus for manufacturing an electrode assembly according to the embodiments of the present invention, it is possible to ensure a uniform bonding force applied to the electrode assembly by increasing a rate of heat transfer to the electrode assembly from the press part.

### [Brief Description of Drawings]

FIG. 1 is a side view for explaining a concept of applying heat and pressure to a stack by using a fixing part and a press part according to an embodiment of the present invention.
FIG. 2A is a top plan view illustrating the fixing part according to the embodiment of the present invention, and FIG. 2B is a cross-sectional view illustrating the fixing part according to the embodiment of the present invention.
FIG. 3 is a cross-sectional view illustrating a fixing part according to another embodiment of the present invention.
FIG. 4A is a top plan view for explaining a concept of coupling a coupling part to the fixing part according to the embodiment of the present invention, and FIG. 4B is a cross-sectional view taken along line A-A' in FIG. 4A.
FIG. 5A is a top plan view for explaining a concept of coupling the fixing part and the coupling part according to another embodiment of the present invention, FIG. 5B is a cross-sectional view taken along line B-B' in FIG. 5A, and FIG. 5C is a cross-sectional view taken along line C-C' in FIG. 5A.
FIG. 6 is a view illustrating cross-sectional structures a central portion and a rim portion according to the embodiments of the present invention.

### [Explanation of Reference Numerals and Symbols]

- 100:: Apparatus for manufacturing electrode assembly
- 10:: Fixing part
- 11:: First fixing block
- 12:: Second fixing block
- 20:: Press part
- 21:: First heating block
- 22:: Second heating block
- 23:: Heating plate
- 30:: Coupling part
- C:: Central portion
- C1:: Protruding portion
- S:: Rim portion
- S1:: First rim portion
- S2:: Second rim portion

### [Best Mode]

The detailed description of the present invention is provided to completely explain the present invention to a person with ordinary skill in the art. Throughout the specification, unless explicitly described to the contrary, when one component "comprises (includes)" another component or "characterized by" having a certain structure and a certain shape, this means that other components, structures, and shapes may be included without being excluded.

The present invention may be variously modified and may have various embodiments, and specific embodiments will be described in detail in the detailed description. However, the description of the embodiments is not intended to limit the contents of the present invention, but it should be understood that the present invention is to cover all modifications, equivalents and alternatives falling within the spirit and technical scope of the present invention.

Hereinafter, the present invention will be described in detail with reference to the drawings. However, the drawings are intended to illustratively describe the present invention, and the scope of the present invention is not limited by the drawings.

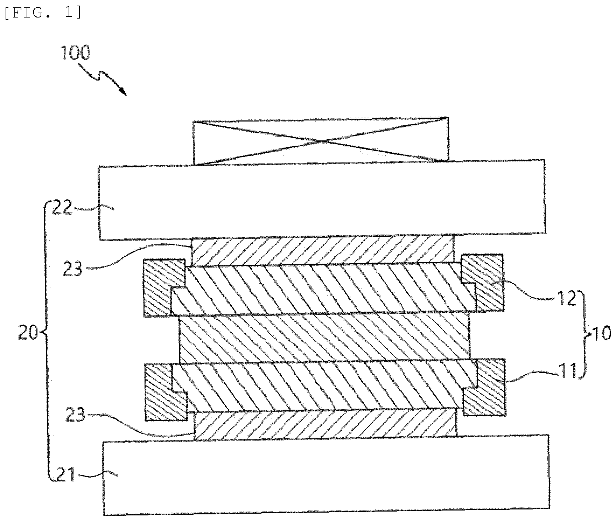

FIG. 1 is a side view for explaining a concept of applying heat and pressure to a stack by using a fixing part 10 and a press part 20 according to an embodiment of the present invention.

The fixing part 10 serves to grip and fix a stack in which one or more first electrodes, one or more separators, and one or more second electrodes are stacked. The fixing part 10 may include a pair of fixing blocks. That is, the fixing part 10 includes a first fixing block 11 and a second fixing block 12. The first and second fixing blocks 11 and 12 move in a direction in which the first and second fixing blocks 11 and 12 face each other. The fixing part 10 may fix the stacks by surface-pressing one or more stacks.

The first and second fixing blocks 11 and 12 may each have a flat pressing surface that comes into contact with and presses the stack. In this case, the pressing surface of each of the first and second fixing blocks 12 is a surface that comes into contact with the stack. The pressing surface may have a shape corresponding to a top plan cross-sectional shape of the stack.

The fixing part 10 may include two or more portions having different properties. The fixing part 10 may include a central portion C and a rim portion S that surrounds the central portion C.

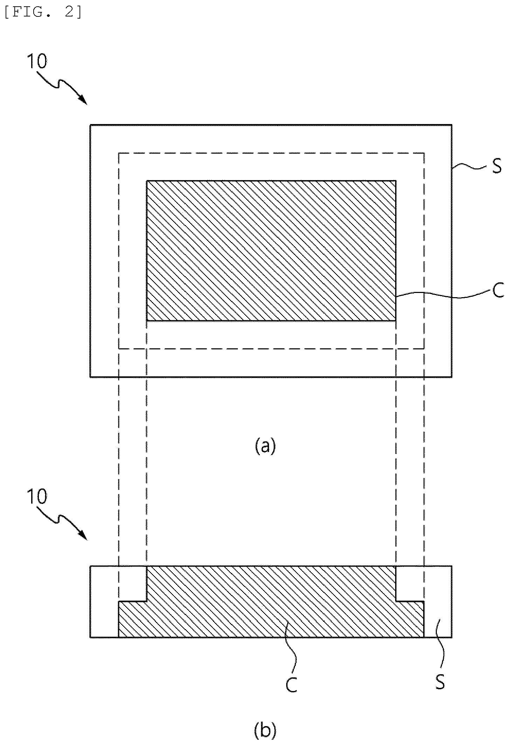

FIG. 2A is a top plan view illustrating the fixing part 10 according to the embodiment of the present invention, and FIG. 2B is a cross-sectional view illustrating the fixing part 10 according to the embodiment of the present invention.

In the embodiment, the first and second fixing blocks 11 and 12 may each include the central portion C having a surface configured to come into contact with the stack, and the rim portion S configured to surround the central portion C. The central portion C and the rim portion S may each be different materials.

The central portion C may account for 40% to 90% of an overall area of 100% of the fixing part 10. The rim portion S may account for 10% to 60% of the overall area of 100% of the fixing part 10.

The surface of the central portion C, which is provided to come into contact with the stack, may have an area corresponding to a cross-sectional area of the stack or be larger than the cross-sectional area of the stack. The cross-sectional area of the stack may mean an area of a surface made by cutting the stack based on a plane.

Further, the central portion C may include a material having higher thermal conductivity than that of the rim portion S and include a material having lower strength than that of the rim portion S. The rim portion S may include a material having higher strength than that of the central portion C.

The rim portion S may be positioned at a lateral end of the central portion C and may not come into contact with the stack.

For example, the central portion C may include any one of silver, copper, gold, aluminum, and duralumin. The rim portion S may include any one of steel (SUS)-based materials, carbon steel, stainless steel, and engineering plastic.

The steel (SUS)-based materials may include stainless steel, chromium, molybdenum, titanium, and niobium.

The engineering plastic may be one or two or more selected from a group consisting of polyamide (PA), polyacetal (POM), polycarbonate (PC), modified polyphenylene ether (PPE), polybutylene terephthalate (PBT), GF-reinforced-polyethylene terephthalate (GF-PET), ultrahigh molecular weight polyethylene (UHPE), polysulfone (PSF), polyethersulfone (PES), polyphenylene sulfide (PPS), polyarylate (PAR), polyamideimide (PAI), polyetherimide (PEI), polyetheretherketone (PEEK), polyimide (PI), liquid crystalline polyester (LCP), polytetrafluoroethylene (PTFE), polyaminobismaleimide (PABM), and polybisamide triazole (BT). Particularly, the engineering plastic may be polyetheretherketone.

An area occupied by the rim portion S on one surface of the fixing part 10, which comes into contact with the stack and, may be different from an area occupied by the rim portion S on the opposite surface (the other surface of the fixing part 10). That is, a length of the central portion C, which occupies the other surface of the fixing part 10, may be shorter than a length of the central portion C that occupies one surface of the fixing part 10. In this case, the length of the central portion C means the longest length among the lengths perpendicular to the stacking direction of the stack.

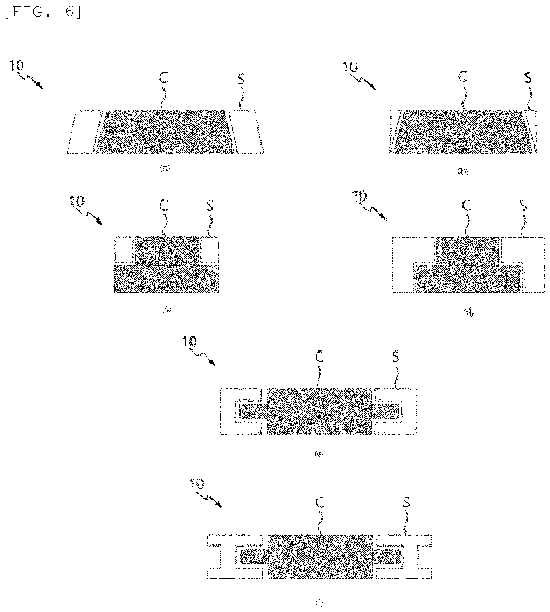

FIG. 6 is a view illustrating cross-sectional structures the central portion C and the rim portion S according to the embodiments of the present invention.

For example, the length of the central portion C increases at a predetermined ratio in a direction from the other surface to one surface, such that a boundary between the central portion C and the rim portion S may be defined as an oblique line. Alternatively, the length of the central portion C changes once in a direction from the other surface to one surface of the fixing part 10, such that a cross-section of the central portion C may be formed in a stepped shape.

In this case, the size and shape of the surface of the rim portion S, which faces the lateral surface of the central portion C, is not particularly limited as long as the surface of the rim portion S corresponds in shape to the lateral surface of the central portion C.

That is, as the length of the central portion C increases at a predetermined ratio in the direction from the other surface to one surface, the rim portion S may have a right-angled inversely triangular shape or a parallelogrammatic shape.

Further, the rim portion S may account for 0% or more and 40% or less of an area of 100% of one surface of the fixing part 10.

The central portion C and the rim portion S of the fixing part 10 may be spaced apart from each other. In this case, a spacing distance between the central portion C and the rim portion S may be a distance defined to the extent that the fixing part 10 is not deformed in shape when the central portion C and the rim portion S are thermally expanded at a process temperature. That is, the spacing distance may be a distance that may accommodate expansion lengths of the central portion C and the rim portion S.

Further, the fixing part 10 may include different types of materials, such that two types of materials may have different coefficients of thermal expansion.

In case that the fixing part 10 receives heat from the press part 20, the two types of materials may be respectively thermally expanded. In this case, interference may occur because of a difference in coefficients of thermal expansion between the different types of materials, which may bend or deform the fixing part 10.

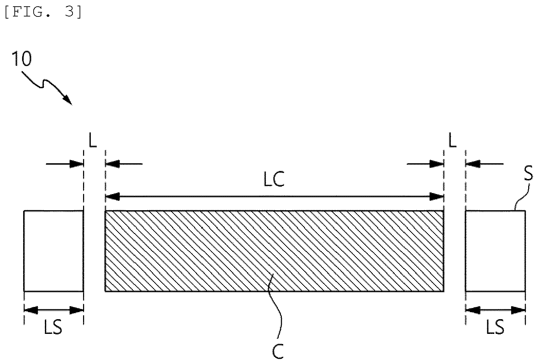

FIG. 3 is a cross-sectional view illustrating the fixing part 10 according to another embodiment of the present invention. For example, the central portion C of the fixing part 10 may include aluminum, and the rim portion S may include steel. A coefficient of thermal expansion of aluminum is 24×10⁻⁶/°C, and a coefficient of thermal expansion of steel is 13×10⁻⁶/°C. Further, a length LC of the central portion C of the fixing part 10 is 100 mm, and a length LS of the rim portion S is 50 mm. A temperature of the central portion C may increase to 100°C by receiving heat from the press part 20. Because the rim portion S partially receives heat from the central portion C, a temperature of the rim portion S may increase to 30°C.

In this case, the expansion length of the central portion C is 0.24 mm, and the expansion length of the rim portion S is 0.0195 mm. Therefore, the spacing distance L between the central portion C and the rim portion S needs to be 0.26 mm or more to prevent interference caused by thermal expansion between the central portion C and the rim portion S and prevent the fixing part 10 from being bent or deformed.

An apparatus 100 for manufacturing an electrode assembly may further include a coupling part 30 configured to couple the central portion C and the rim portion S of the fixing part 10. The coupling part 30 serves to couple the central portion C and the rim portion S in the state in which the central portion C and the rim portion S of the fixing part 10 are spaced apart and separated from each other. The fixing part 10 may couple the central portion C and the rim portion S by any one method of riveting and T-shaped screw coupling.

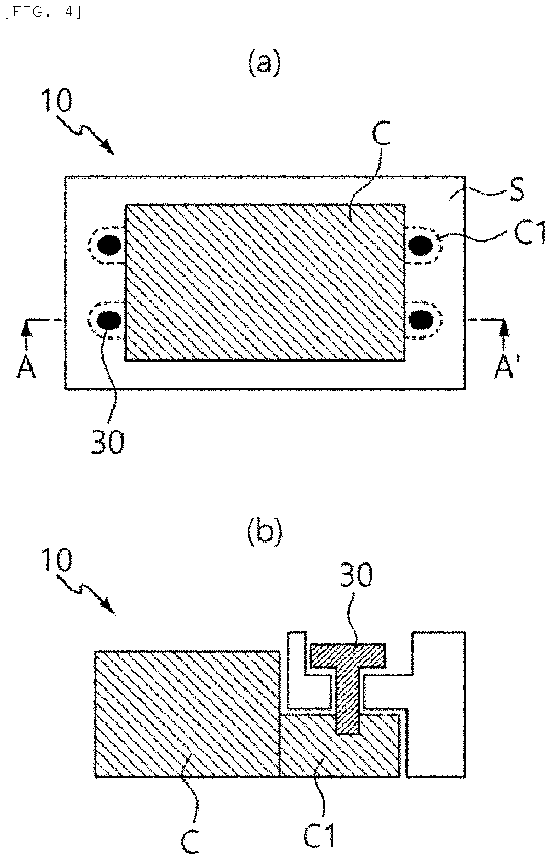

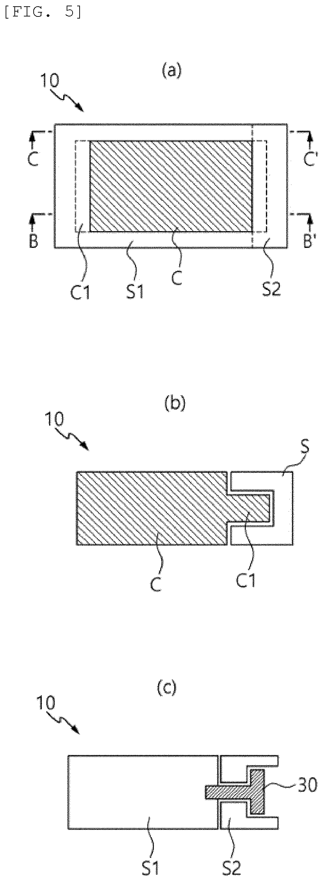

FIG. 4A is a top plan view for explaining a concept of coupling the coupling part 30 to the fixing part 10 according to the embodiment of the present invention, and FIG. 4B is a cross-sectional view taken along line A-A' in FIG. 4A. FIG. 5A is a top plan view for explaining a concept of coupling the fixing part 10 and the coupling part 30 according to another embodiment of the present invention, FIG. 5B is a cross-sectional view taken along line B-B' in FIG. 5A, and FIG. 5C is a cross-sectional view taken along line C-C' in FIG. 5A.

With reference to FIGS. 4A and 4B, the central portion C of the fixing part 10 according to the embodiment may include a first protruding portion C1 protruding in a width direction of the central portion C. The first protruding portion C1 may be provided as one or more first protruding portions C1. In this case, the width direction of the central portion C may mean a direction perpendicular to a pressing direction of the press part 20, i.e., a direction in which a length of the central portion C is longest in a direction from one end surface to the other end surface.

For example, the central portion C may be provided on a lateral surface on which the pair of first protruding portions C1 faces each other. The pair of first protruding portions C1 may be positioned to be spaced apart from each other.

Alternatively, the protruding portion C1 may be provided along the lateral surface of the central portion C. The protruding portion C1 may be provided at a height lower than a height of the central portion C. Further, one surface of the protruding portion C1 may be positioned on the same line as one surface of the central portion C. In this case, one surface and the other surface of each of the central portion C and the protruding portion C1 may mean surfaces facing the press part 20. The lateral surface may mean a surface that connects one surface and the other surface.

For example, the protruding portion C1 may have a stepped shape having a length that changes once in the width direction of the central portion C.

In this case, the coupling part 30 may be coupled to a position corresponding to a position of the protruding portion C1. The coupling part 30 may be provided in the form of a rivet and penetrate the rim portion S in a direction from the other surface to one surface of the fixing part 10. The coupling part 30 may be fixed to the central portion C and couple the central portion C and the rim portion S. The rim portion S penetrated by the coupling part 30 may be a region stacked on the other surface of the protruding portion C1.

Alternatively, the coupling part 30 may penetrate the rim portion S in a direction from one side surface to the other side surface of the fixing part 10 and be fixed to the central portion C.

That is, the coupling part 30 may completely penetrate the rim portion S, and only a part of the coupling part 30 may be inserted into the central portion C.

The rim portion S may include a coupling hole (not illustrated) into which the coupling part 30 is inserted. The coupling part 30 may be inserted into the coupling hole and thus inserted into the central portion C. In this case, the coupling part 30 may be positioned to be spaced apart from an inner surface of the coupling hole.

That is, spacing distances may be defined between the central portion C and the rim portion S and between the coupling hole and the coupling part 30 so that the fixing part 10 according to the embodiment may accommodate the increased length or width of the central portion C when a volume of the central portion C is increased by thermal expansion.

In case that the coupling part 30 is configured as a round rivet, a round countersunk rivet, a flat rivet, a flat countersunk rivet, and a T-shaped screw and thus includes a head portion that protrudes after the coupling part 30 is coupled to the fixing part 10, the rim portion S may further include a groove having a predetermined depth and formed at a position at which the head portion of the coupling part 30 is positioned.

With reference to FIGS. 5A, 5B, and 5C, the fixing part 10 according to another embodiment may be configured such that the protruding portion C1 may be provided along the lateral surface of the central portion C and positioned at a center of the lateral surface of the central portion C. That is, the fixing part 10 according to another embodiment may be configured such that one surface and the other surface of the protruding portion C1 are not positioned on the same line as one surface and the other surface of the central portion C.

The rim portion S may have an accommodation groove S1 that may accommodate the protruding portion C1 protruding from the lateral surface of the central portion C. The protruding portion C1 and the accommodation groove (not illustrated) may be positioned to be spaced apart from each other. For example, a cross-section of the rim portion S may have a ' 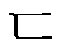 ' shape or an H-beam shape.

The rim portion S may include a first rim portion S1 and a second rim portion S2 so as to position the protruding portion C1 in the accommodation groove S1. The coupling part 30 may fix the first and second rim portions S1 and S2.

For example, the rim portion S may be configured to surround the central portion C and provided in the form of a picture frame based on a top plan view of the fixing part 10. In this case, the first rim portion S1 may have a ' 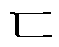 ' shape, and the second rim portion S2 may have a ' 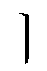 ' shape.

The coupling part 30 may penetrate the portion, where the first and second rim portions S1 and S2 are in contact with each other, in the direction from the one side surface to the other side surface of the rim portion S and couple the first and second rim portions S1 and S2.

The central portion C is configured such that the accommodation groove is mated with the protruding portion C1, such that a configuration for fixing the central portion C and the rim portion S may be excluded, and the coupling part 30 and the rim portion S may not be spaced apart from each other.

The press part 20 may serve to heat and press the fixing part 10 and include a pair of heating blocks 21 and 22. That is, the press part 20 includes a first heating block 21 and a second heating block 22. The first and second heating blocks 21 and 22 may move in a direction in which the first and second heating blocks 21 and 22 face each other, such that the first and second heating blocks 21 and 22 may respectively supply heat and press one surface of each of the first and second fixing blocks 11 and 12.

The pair of heating blocks 21 and 22 may each include a heating surface that comes into contact with the fixing part 10 and heats the fixing part 10.

In the embodiment, the press part 20 may be configured such that heating plates 23 are provided on the heating surfaces of the pair of heating blocks 21 and 22. In this case, the heating plate 23 may have a flat surface that comes into contact with the fixing part 10.

In another embodiment, the press part 20 may include a heating part (not illustrated) therein. The heating part may be provided in the form of a line, a plate, or a rod configured to be heated by receiving electric power and included in the press part 20.

In this case, to transfer the heat generated by the heating part to the fixing part 10, the press part 20 may include a material having thermal conductivity.

Further, the heating plate 23 and the heating part may receive electric power from an external power source. Alternatively, a power source may be further included in the other surface of the press part 20, such that the heating plate 23 may receive electric power from the power source coupled to the press part 20.

The apparatus 100 for manufacturing an electrode assembly may further include a pre-processing unit (not illustrated). The pre-processing unit may serve to manufacture a stack to be supplied to the fixing part 10 and further include a first electrode supply part, a separator supply part, and a second electrode supply part.

Further, the first electrode, the separator, and the second electrode may be supplied to the fixing part 10. For example, when the first electrode, the separator, and the second electrode are supplied to the first fixing block 11, the second fixing block 12 may move in the direction of the first fixing block 11 and fix the stack. That is, among the pair of fixing blocks 11 and 12, the fixing block, on which the first electrode, the separator, and the second electrode are supplied and stacked, may be fixed in position without moving.

While the present invention has been described above with reference to the exemplary embodiments, it may be understood by those skilled in the art that the present invention may be variously modified and changed without departing from the spirit and scope of the present invention disclosed in the claims.

## Claims

1. An apparatus for manufacturing an electrode assembly, the apparatus comprising:
a fixing part configured to grip and fix a stack in which one or more first electrodes, one or more separators, and one or more second electrodes are stacked; and
a press part configured to heat and press the fixing part,
wherein the fixing part comprises two or more portions having different properties.

2. The apparatus of claim 1, wherein the fixing part comprises:
a central portion comprising a surface configured to come into contact with the stack; and
a rim portion configured to surround the central portion, and
wherein the central portion and the rim portion are made of different types of materials.

3. The apparatus of claim 2, wherein the central portion has higher thermal conductivity than the rim portion, and the rim portion has higher strength than the central portion.

4. The apparatus of claim 2, wherein the central portion includes any one of silver, copper, gold, aluminum, and duralumin.

5. The apparatus of claim 2, wherein the rim portion includes any one of a steel-based material, carbon steel, stainless steel, and engineering plastic.

6. The apparatus of claim 2, wherein the central portion accounts for 40% to 90% of an overall area of 100% of the fixing part, and the rim portion accounts for 10% to 60% of the overall area of 100% of the fixing part.

7. The apparatus of claim 2, wherein the rim portion does not come into contact with the stack.

8. The apparatus of claim 2, wherein the central portion and the rim portion are spaced apart from each other.

9. The apparatus of claim 8, further comprising:
a coupling part configured to couple the central portion and the rim portion.

10. The apparatus of claim 9, wherein the coupling part couples the central portion and the rim portion by any one method of riveting and T-shaped screw coupling.

11. The apparatus of claim 1, wherein the fixing part comprises a pair of fixing blocks, and the pair of fixing blocks presses one or more surfaces of the stack while moving in a direction in which the pair of fixing blocks faces each other.

12. The apparatus of claim 11, wherein the pair of fixing blocks each has a flat pressing surface that comes into contact with and presses the stack.

13. The apparatus of claim 1, wherein the press part comprises a pair of heating blocks, and the pair of heating blocks each has a heating plate provided on one surface of each of the pair of heating blocks that comes into contact with the fixing part.

14. The apparatus of claim 1, wherein the press part comprises a pair of heating blocks, and a heating part is included in each of the pair of heating blocks.
